# EUROPEAN PATENT SPECIFICATION

(11) **EP 2 012 198 B1**
(45) Date of publication and mention of the grant of the patent: **24.11.2010**
(21) Application number: 06834917.4
(22) Date of filing: 18.12.2006
(51) Int. Cl.: G03H 1/04, G11B 7/0065, G11B 7/135, G11B 7/24

(54) **METHOD AND EQUIPMENT FOR PROCESSING OPTICAL RECORDING MEDIUM, AND OPTICAL RECORDER/REPRODUCER**
VERFAHREN UND GERÄTE ZUM VERARBEITEN EINES OPTISCHEN AUFZEICHNUNGSMEDIUMS UND OPTISCHE AUFZEICHNUNGS-/WIEDERGABEVORRICHTUNG
PROCEDE ET EQUIPEMENT POUR TRAITER UN SUPPORT D'ENREGISTREMENT OPTIQUE, ET ENREGISTREUR/REPRODUCTEUR OPTIQUE

(30) Priority: 31.03.2006 JP 2006098955
(43) Date of publication of application: 07.01.2009
(73) Proprietor: Fujifilm Corporation, Minato-ku Tokyo 106-8620 (JP)
(72) Inventor: KAMO, Makoto, Kanagawa 258- 8577 (JP); USAMI, Yoshihisa, Kanagawa 258- 8577 (JP); SASAKI, Toshio, Kanagawa 258- 8577 (JP)
(74) Representative: Grünecker, Kinkeldey, Stockmair & Schwanhäusser Anwaltssozietät
(86) International application number: PCT/JP2006/325207
(87) International publication number: WO 2007/116565

(56) References cited:
- JP-A- 2003 050 534
- JP-A- 2003 121 944
- US-A1- 2002 004 172
- US-A1- 2003 073 007
- US-A1- 2005 221 198

## Description

The present invention relates to a method and device for treating an optical recording medium according to the generic clauses of claims 1 and 5 and an optical recording and reproducing apparatus containing the device for treating an optical recording medium.

A method and a device according to the generic clauses of claims 1 and 5 are already known from document US 2005/0221198A1. This document describes a hologram recording material comprising at least one metal complex die as a sensitizing die.

Optical recording media are one type of the recording media which can write a large volume of information such as high-density image data. The optical recording media which have already been put into practice are, for example, rewritable optical recording media (e.g., magnetic optical discs and phase-change optical discs) and recordable optical recording media (e.g., CD-R). Nevertheless, still increased demand has arisen for optical recording media having much larger storage capacity. Conventional optical recording media record information two-dimensionally, which imposes limitation on increase in storage capacity. In view of this, recent interest has focused on hologram optical recording media which can record information three-dimensionally.

In general, the hologram optical recording media record information in such a manner that an information beam having a two-dimensional intensity distribution and a reference beam having an intensity almost equal to that of the information beam are superposed inside a photosensitive recording layer so as to form an interference pattern, which is used to form an optical characteristic distribution inside the recording layer. Meanwhile, written information is read (reproduced) by applying only the reference beam to the recording layer in the same arrangement as employed in recording by emitting, from the recording layer, a reproduction beam having an intensity distribution corresponding to the optical characteristic distribution formed inside the recording layer.

The hologram optical recording medium is based on a three-dimensional optical characteristic distribution formed inside the recording layer. Thus, the hologram optical recording medium attains multiplex recording, specifically, a method in which a first region where information has been recorded by a first information beam can be partially overlapped with a second region where information has been recorded by a second information beam. In use of digital volume holography, the signal-to-noise ratio (S/N ratio) at one spot is extremely high and thus, even when the S/N ratio is rather reduced as a result of multiplex recording, the original information can be reproduced with fidelity. By virtue of these characteristics, the hologram optical recording medium allows multiplex recording at as many as several hundreds times, and exhibits remarkably increased storage capacity (see Patent Literature 1).

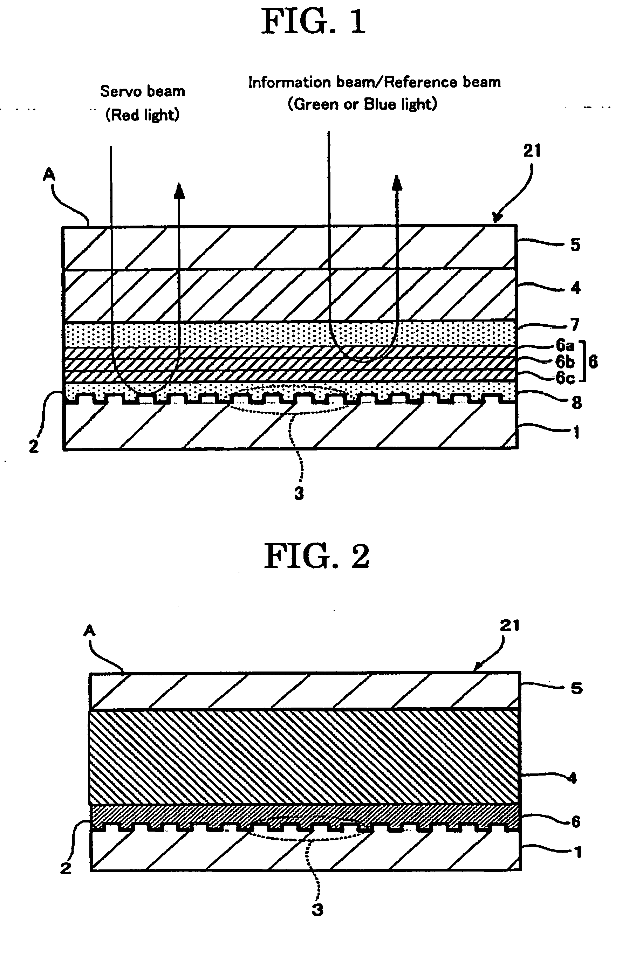

One optical recording medium is the type of an optical recording medium 21 shown in FIG.1, which includes, a first substrate 1, a first gap layer 8, a filter layer 6, a second gap layer 7, a recording layer 4 and a second substrate 5 in this order. The optical recording medium 21 is for use in a recording method in which an information beam and a reference beam are applied so that the optical axis of the information beam is coaxial with that of the reference beam.

Of these proposed hologram optical recording media, write-once read-many and rewritable optical recording media store information for long time and the stored information is repeatedly reproduced, thus, it is preferred that a recording layer of the optical recording media be subjected to sensitization after recording information. Particularly, a write-once read-many optical recording medium using a photopolymer in a recording layer can maintain a recorded image in a good condition by suitably subjecting the recording layer to insensitization (also referred to as insensitization treatment), thereby enabling to dramatically enhance long-term storage property and durability against repetitive reproduction of the recorded image compared to those-before-insensitization treatment.

However, in an optical recording medium having a thick recording layer, which records information using holography, unpredictable change of physical properties may occur upon insensitization treatment due to the thick recording layer which has been recorded information, and a recorded image cannot be reproduced properly.
Patent Literature 1: Japanese Patent Application Laid-Open (JP-A) No. 2002-123949

### Disclosure of Invention

An object of the present invention is to provide a method and device for treating an optical recording medium, which can enhance long-term storage property and durability against repetitive reproduction of a recorded image in an optical recording medium having a thick recording layer which records information using holography, by subjecting the recording layer to insensitization without degrading information, and to provide an optical recording and reproducing apparatus containing the device for treating an optical recording medium.

Means for solving the above-described problems are described below.
<1> A method for treating an optical recording medium including irradiating a recording layer, which has recorded information, with a treatment light through a light diffusion member having a haze of 70% to 100%, wherein the optical recording medium contains at least the recording layer which records information using holography.
<2> The method for treating an optical recording medium according <1>, wherein a half width of wavelength for an energy intensity of the treatment light is 5 nm to 700 nm.
<3> The method for treating an optical recording medium according to any one of <1> to <2>, wherein the optical recording medium is a write-once read-many optical recording medium.
<4> An optical recording and reproducing method including the method for treating an optical recording medium according to any one of <1> to <3>.
<5> A device for treating an optical recording medium containing a light source for a treatment light, and a light diffusion member having a haze of 70% to 100% and disposed between the light source and the optical recording medium containing at least a recording layer which records information using holography, wherein the recording layer which has recorded information is irradiated with the treatment light through the light diffusion member from the light source.
<6> The device for treating an optical recording medium according to <5>, wherein a half width of wavelength for an energy intensity of the treatment light is 5 nm to 700 nm.
<7> The device for treating an optical recording medium according to any one of <5> to <6>, wherein the optical recording medium is a write-once read-many optical recording medium.
<8> An optical recording and reproducing apparatus containing the device for treating an optical recording medium according to any one of <5> to <7>.

A method for treating an optical recording medium of the present invention includes irradiating a recording layer which has recorded information with a treatment light through a light diffusion member having a haze of 70% to 100%, wherein the optical recording medium contains at least the recording layer which records information using holography. Therefore, the thick recording layer which records information using volume holography is subjected to insensitization without degrading information, thereby enabling to enhance long-term storage property and durability against repetitive reproduction of a recorded image.

The device for treating an optical recording medium of the present invention contains a light source for a treatment light, and a light diffusion member having a haze of 70% to 100% and disposed between the light source and the optical recording medium containing at least a recording layer which records information using holography, wherein the recording layer, which has recorded information, is irradiated with the treatment light through the light diffusion member from the light source. As a result, when the recording layer which has recorded information is subjected to insensitization, information is not degraded, and long-term storage property and durability against repetitive reproduction of a recorded image can be enhanced.

### Brief Description of Drawings

FIG. 1 is a schematic cross-sectional view of an example of a conventional optical recording medium.
FIG. 2 is a schematic cross-sectional view of an exemplary optical recording medium of the present invention.
FIG. 3 is an explanatory view of an exemplary optical system surrounding an optical recording medium, according to the present invention.
FIG. 4 is a schematic cross-sectional view of an exemplary optical recording and reproducing apparatus of the present invention.
FIG. 5 is a block diagram of a configuration of an exemplary optical recording and reproducing apparatus of the present invention.

### Best Mode for Carrying Out the Invention

### (Method for Treating Optical Recording Medium and Device for Treating Optical Recording Medium)

A method for treating an optical recording medium of the present invention includes irradiating a recording layer with a treatment light through a light diffusion member having a haze of 70% to 100%, wherein an optical recording medium contains at least the recording layer which records information using holography

A device for treating an optical recording medium of the present invention contains a light source for a treatment light, and a light diffusion member having a haze of 70% to 100°/ and disposed between the light source and the optical recording medium containing at least a recording layer which records information using holography, wherein the recording layer which has recorded information, is irradiated with the treatment light through the light diffusion member from the light source.

Hereinafter, the method for treating an optical recording medium of the present invention and the device for treating an optical recording medium of the present invention will be explained in detail.

### - Light source for treatment light -

The light source for the treatment light is not particularly limited and any light source can be used depending on the purpose. Examples thereof include a fluorescent lighting, mercury lamp, xenon lamp, halogen lamp, light-emitting diode, laser and flash lamp. Additionally, an optical fiber, lens optic system, optical waveguide or the like may be used to guide and emit light from these light sources. A plurality of light sources may be used in combination. In this case, the above-described light sources of different kinds may be arbitrarily used in combination, light sources of the same kind may be used in combination, light sources having different wavelength ranges may be used in combination, or light sources having the same wavelength range may be used in combination. Of these, a light-emitting diode is preferably used because of easiness of heat generation from a light source and of facilities, and combinations of different kinds of light-emitting diodes having different wavelength ranges are more preferably used.

The wavelength-of the light source is not particularly limited and may be appropriately selected depending on the photosensitive wavelength of the recording layer of the optical recording medium to be used. It is preferably 300 nm to 1,000 nm, more preferably 350 nm to 700 nm, and still more preferably 400 nm to 600 nm. In this wavelength range, the recording layer is subjected to insensitization (hereinafter also referred to as insensitization treatment) smoothly without difficulty. When the wavelength is more than 1,000 nm, energy per photon is decreased and the treatment may require a prolonged time, causing the complicated treatment. When the wavelength is less than 300 nm, unpredictable change of physical properties may occur in the recording layer and other members in the optical recording medium due to excessive energy per photon.

### - Light diffusion member -

The light diffusion member has a haze of 70% to 100%, preferably 72% to 95%, and more preferably 75% to 90%. By using the light diffusion member having a haze in the above range, information is not degraded when the recording layer which has recorded information is subjected to insensitization, and long-term storage property and durability against repetitive reproduction of a recorded image can be enhanced.

When multilayered light diffusion members are used as described later, the multilayered light diffusion members are not particularly limited as long as they satisfy the above range of haze. Each of the light diffusion members preferably has a haze of 15% to 100%, and more preferably 30% to 90%, and still more preferably 40% to 90%.

Here, "haze" is a percentage of transmitted lights deflected at 2.5° or more from the angle of incident light due to forward scattering among transmitted lights passing though the light diffusion member, and defined as "a ratio of diffuse transmittance to total light transmittance (sum of parallel transmittance and diffuse transmittance)". The haze can be measured in accordance with a method of JIS K7136 or JIS K7105.

The light diffusion member is not particularly limited and may be appropriately selected depending on the purpose. Examples thereof include obscure glass, obscured resin sheets, obscured resin pieces, cells in which a light diffusion liquid is encapsulated and liquid crystal panels. Of these, obscure glass, obscured resin sheets and obscured resin pieces are particularly preferable.

As the obscure glass, glass treated with hydrogen fluoride, or glass having fine irregularity on its surface by means of brush graining, sandblasting or the like may be used. Of these, the glass treated with hydrogen fluoride is particularly preferable because of high haze.

The obscured resin sheets or obscured resin pieces are formed by stretching, casting or molding resins. Examples of the resins used for the obscured resin sheets or obscured resin pieces include acetate resins (e.g., triacetyl cellulose); polyester resins, polyether sulfone resins, polysulfone resins, polycarbonate resins, polyamide resins, polyimide resins, polyolefin resins, acrylic resins, polynorbornene resins, cellulose resins, polyarylate resins, polystyrene resins, polyvinyl alcohol resins, polyvinyl chloride resins, polyvinylidene chloride resins, polyacrylic resins and polylactic acid resins. The obscured resin sheets or obscured resin pieces are preferably used after treated, for example, by chemical treating, utilizing phase separation upon stretching, making fine scars on their surface by means of brush graining or sandblasting, or giving light diffusion by coating or adhering particles onto their surface. As a material of the resin, a casting flim of triacetyl cellulose, a stretched film of polyethylene terephthalate (PET), a stretched film of polyethylene or polypropylene, a stretched film of polycycloolefin and the like are preferably used in terms of optical transparency.

The light diffusion member may be disposed by directly covering the light source, may be disposed adjacent to the optical recording medium or may be arranged in an optical path at a certain interval between the light source and the optical recording medium. According to the present invention, it is noted that the light diffusion member is disposed so that any light applied to the optical recording medium from the light source passes though the light diffusion member at least once. Of the above described light diffusion members, the light diffusion members of different kinds may be used in combination or the light diffusion members of the same kind may be used. A plurality of light diffusion members may be disposed. When a plurality of light diffusion members are used, haze is preferably measured under the condition that all light diffusion members are multilayered in accordance with the above-described method.

The light source and light diffusion member may be mounted in the optical recording and reproducing apparatus which will be explained later, or may be mounted in a separate device. The light source and light diffusion member are preferably mounted in the optical recording and reproducing apparatus, in that information can be treated at once immediately after recording it.

The light, which is emitted from the light source and passed though the light diffusion member, can be applied to the optical recording medium by way of any path. Examples of the paths include an optical system using a lens, mirror or the like, and an optical guiding unit using an optical fiber or optical waveguide. Alternatively, without disposing these paths, light may be directly applied to the optical recording medium from the light diffusion member.

Examples of optical elements which can be disposed in optical paths from the light source to the light diffusion member, and from the light diffusion member to the optical recording medium, include a phase modulating element, spatial modulating element, beam splitter, wavelength-tunable apparatus; and optical filter for controlling wavelength of transmitted light, mirror, polygon mirror, pinhole, slit, 1/X retardation plate, optical waveguide, optical fiber, lens and interference lens.

The half width of a wavelength for an energy intensity of the treatment light which is applied to the recording layer of the optical recording medium is preferably 5 nm to 700 nm, more preferably 30 nm to 300 nm, an still more preferably 50 nm to 100 nm. Here, "half width of wavelength for an energy intensity" is, in a graph of energy intensity vs wavelength, a difference between the maximum and minimum values of the wavelength corresponding to the half value of the peak energy intensity. Here, the unit for the energy intensity is watt "W" or electron volt "eV". This value can be measured by any actinometer. In the above range of half width, long-term storage property and durability against repetitive reproduction of information can be enhanced while information degradation is minimized. When the half width is more than 700 nm, light having the maximum or minimum wavelength is excessively absorbed in a composition of a member or the recording layer of the optical recording medium, causing unpredictable change of physical properties. As a result, information degradation is induced. Alternatively, energy cannot be sufficiently applied to treat the recording layer due to absorption, thus treatment efficiency may be decreased. When the half width is less than 5 nm, an interference fringe is generated in the recording layer by reflection, diffraction, refraction or uneven thickness. As a result, information degradation may be accelerated.

In the method for treating an optical recording medium, the total amount of light applied to the recording layer of the optical recording medium is not particularly limited and may be appropriately selected depending on the purpose.

### <Optical Recording Medium>

The optical recording medium contains at least the recording layer which records information using holography, and further contains other layers as necessary. As the optical recording medium, a write-once read-many optical recording medium (WORM is preferably used.

The optical recording medium is not particularly limited as long as recording and reproducing can be performed using the holographic principle. It may be a relatively thin, flat hologram for recording two-dimensional information or may be a volume hologram for recording large volume of information such as stereoimages, and in either case, the hologram may be any of transmissive type and reflective type. In addition, the hologram may be recorded in any system, including amplitude holograms, phase holograms, blazed holograms, complex amplitude holograms and so forth.

The optical recording medium is not particularly limited as long as it has a recording layer which records information using holography, and may be appropriately selected depending on the purpose. The optical recording medium preferably contains at least a first substrate, a selective reflection layer, and a recording layer and a second substrate in this order, and further contains other layers as necessary.

### - Recording layer -

The recording layer contains at least a binder, polymerizable monomer and polymerization initiator, and further contains other components as necessary.

The binder is not particularly limited and may be appropriately selected depending on the purpose. Examples thereof include acrylic resins, urethane resins, polyester resins, polycarbonate resins, norbornene resins, styrene resins, polyether sulfone resins, silicone resins, polyamide resins, polyimide resins, polysiloxane resins, fluorine resins, polybutadiene resins, vinyl ether resins, and vinyl ester resins. These may be used alone or in combination.

The amount of the binder relative to the total mass of the holographic recording layer is preferably 50% by mass to 99% by mass, more preferably 60% by mass to 98 % by mass, and still more preferably 70% by mass to 95% by mass. In this range, the recording layer having excellent sensitivity, multiplicity and storage property can be obtained. When the amount of the binder is less than 50% by mass, information may be lost during long-term storage. When the amount of the binder is more than 99% by mass, a monomer cannot be sufficiently contained, thus the recording layer which satisfies sensitivity and multiplicity may not be sometimes obtained.

As the polymerizable monomer, cationic polymerizable monomers and radical polymerizable monomers can be used. Either one of them may be used or these may be used in combination.

Examples of cationic polymerizable monomers include diglycidyl ethers and polyglycidyl ethers of polyhydric alcohol or alkylene oxide adducts thereof. Specific examples thereof include diglycerol polyglycidyl ether, pentaerythritol polyglycidyl ether, 1,4-bis(2,3-epoxypropoxy perfluoroisopropyl)cyclohexane, sorbitol polyglycidyl ether, trimethylolpropane polyglycidyl ether, resorcin diglycidyl ether, 1,6-hexanediol diglycidyl ether, polyethylene glycol diglycidyl ether, phenyl glycidyl ether, p-tert-butylphenyl glycidyl ether, adipic acid diglycidyl ester, o-phthalic acid diglycidyl ester, dibromophenyl glycidyl ether, dibromoneopentyl glycol diglycidyl ether, 1,2,7,8-diepoxyoctane, and 1,6-dimethylol perfluorohexane diglycidyl ether.

Examples of aromatic epoxides include diglycidyl ethers and polyglycidyl ethers produced by reacting epichlorhydrin with polyhydric phenols having at least one benzene nucleus or alkylene oxide adducts thereof. Specific examples include diglycidyl ethers and polyglycidyl ethers produced using bisphenol A or alkylene oxide adducts thereof; diglycidyl ethers and polyglycidyl ethers produced using hydrogenated bisphenol A or alkylene oxide adducts thereof, and novolac epoxy resins. Examples of alkylene oxides include ethylene oxide and propylene oxide.

Glycidyl ether compounds having a glycidyl ether group which is substituted with the following groups can be used as oxetane compounds: 2-oxetanyl-n-propyl ether, 2-oxetanyl-n-butyl ether, 2-oxetanyl-n-pentyl ether, 2-oxetanyl-n-hexyl ether, 2-oxetanyl-3-phenylethyl ether; 2-oxetanyl-2-benzyl-ethyl-ether 3-oxetanyl-n₋butyl ether, 3-oxetanyl-n-pentyl ether, 3-oxetanyl-n-hexyl ether, 3-oxetanyl-3-phenyl-n-propylether, 4-oxetanyl-n-pentyl ether, 4-oxetanyl-n-hexyl ether, 4-oxetanyl-n-heptyl ether, 4-oxetanyl-4- phenyl-n-butyl ether or 5-oxetanyl-n-hexyl ether. Of these compounds, compounds using 2-oxetanyl-n-propylether or 2-oxetanyl-n-butyl ether are particularly preferably used in terms of easy availability.

Moreover, as alicyclic epoxides, preferred are cyclohexene oxide-containing compounds and cyclopentene oxide-containing compounds produced by epoxidizing compounds containing at least one cycloalkane ring (e.g., cyclohexene ring or cyclopentene ring) with an appropriate oxidizing agent (e.g., hydrogen peroxide or peroxy acid). Specific examples thereof include 4,4'-bis(2,3-epoxypropoxy perfluoroisopropyl)diphenylether, 3,4-epoxycyclohexylmethyl-3',4'-epoxycyclohexanecarboxylate, 3,4-epoxycyclohexyloxirane, 1,2,5,6-diepoxy-4,7-methanoperhydroindene, 2-(3,4-epoxycyclohexyl)-3',4'-epoxy-1,3-dioxane-5-spirocyclohexane, 1,2-ethylenedioxy-bis(3,4-epoxycylohexylmethane), 4',5'-epoxy-2'-methylcyclohexylmethyl-4,5-epoxy-2-methylcyclohexanecarboxylate, ethylene glycol-bis(3,4-epoxycyclohexanecarboxylate), bis-(3,4-epoxycyclohexylmethyl)adipate, di-2,3-epoxycyclopentyl ether, and compounds listed below.

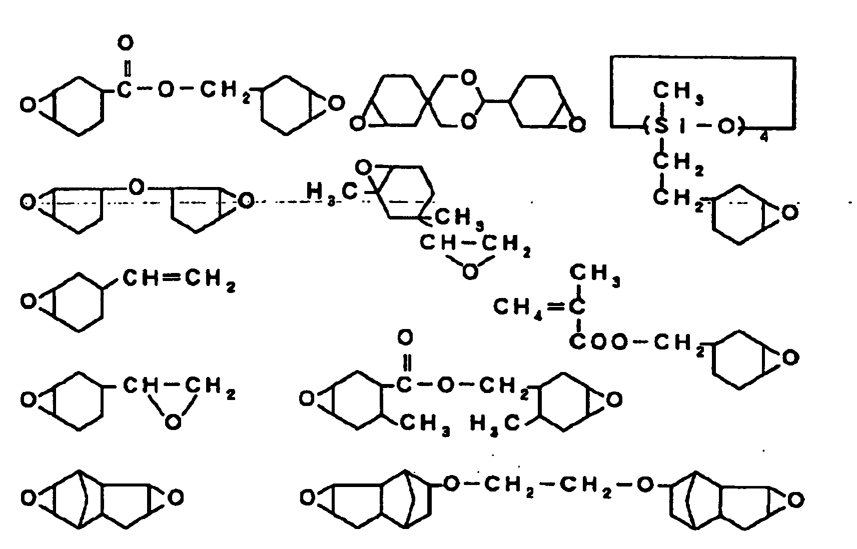

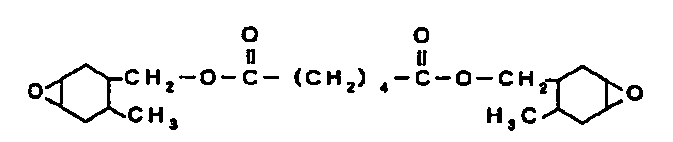

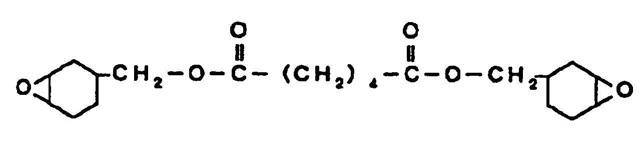

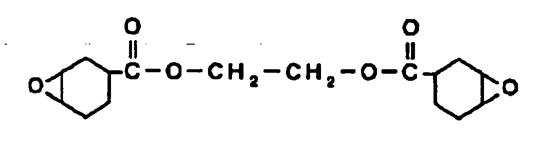

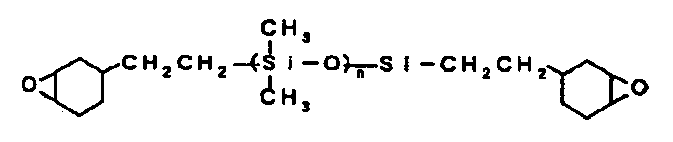

Examples of vinyl ether compounds include divinyl ether compounds and trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, 1,4-cyclohexanedimethanol divinyl ether, trimethylolpropane trivinyl ether; and monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-O-propylene carbonate, dodecyl vinyl ether; diethylene glycol monovinyl ether, and octadecyl vinyl ether vinyl-2-chloroethyl ether; and vinyl glycidyl ether. These may be used alone or in combination.

Examples of radical polymerizable monomers include unsaturated carboxylic acid (e.g., acrylic acid, methacrylic acid, itaconic acid, crotonic acid, isocrotonic acid, and maleic acid) and esters and amides thereof. Esters of unsaturated carboxylic acids and polyhydric alcohol compounds, and amides of unsaturated carboxylic acids and polyhydric amine compounds are preferably used. In addition, preferred are addition products formed between esters or amides of unsaturated carboxylic acids having a nucleophilic substituent (e.g., a hydroxyl group or an aminocarboncapto group) and monofunctional or polyfunctional isocyanates or epoxies; and dehydration-condensation products formed between the esters or amides and monofunctional or polyfunctional carboxylic acids. In addition, preferred are addition products formed between esters or amides of unsaturated carboxylic acids having an electrophilic substituent (e.g., an isocyanate group or an epoxy group) and monofunctional or polyfunctional alcohols, amines or thiols. Further, substituted products formed from esters or amides of unsaturated carboxylic acids having a substituent (e.g., halogen) and monofunctional or polyfunctional alcohols, amines, or thiols are also preferably used. Furthermore, compounds obtained by replacing the unsaturated carboxylic acids with unsaturated phosphonic acids, styrene or the like can be also used.

Examples of monomers of esters formed between polyhydric alcohol compounds and unsaturated carboxylic acids include acrylate esters. Examples of acrylate esters include ethylene glycol diacrylate, triethylene glycol diacrylate, 1,3-butanediol diacrylate, tetramethylene glycol diacrylate, propylene glycol diacrylate, neopentyl glycol diacrylate, trimethylolpropane triacrylate, trimethylolpropane tri(acryloyloxypropyl) ether, trimethylolethane triacrylate, hexanediol-diacrylate, 1,4-cyclohexanediol diacrylate, tetraethylene glycol diacrylate; pentaerythritol diacrylate, pentaerythritol triacrylate, pentaerythritol tetraacrylate, dipentaerythritol diacrylate, dipentaerythritol hexaacrylate, sorbitol triacrylate, sorbitol tetraacrylate, sorbitol pentaacrylate, sorbitol hexaacrylate, tri(acryloyloxyethyl) isocyanurate, polyesteracrylate oligomer, isocyanuric acid EO-modified triacrylate, benzylacrylate, 2-phenoxyethyl acrylate, naphthylacrylate, isobornyl acrylate and tribromophenyl acrylate.

Examples of methacrylate esters include tetramethylene glycol dimethacrylate, triethylene glycol dimethacrylate, neopentyl glycol dimethacrylate, trimethylolpropane trimethacrylate, trimethylolethane trimethacrylate, ethylene glycol dimethacrylate, 1,3-butanediol dimethacrylate, hexanediol dimethacrylate, pentaerythritol dimethacrylate, pentaerythritol trimethacrylate, pentaerythritol tetramethacrylate, dipentaerythritol dimethacrylate, dipentaerythritol hexamethacrylate, sorbitol trimethacrylate, sorbitol tetramethacrylate bis[p-(3-methacryloxy-2-hydroxypropoxy)phenyl]dimethylmethane and bis-[p-(methacryloxyethoxy)phenyl]dimethylmethane.

Examples of itaconate esters include ethylene glycol diitaconate, propylene glycol diitaconate, 1,3-butanediol diitaconate, 1,4-butanediol diitaconate, tetramethylene glycol diitaconate, pentaerythritol diitaconate and sorbitol tetraitaconate.

Examples of crotonate esters include ethylene glycol dicrotonate, tetramethylene glycol dicrotonate, pentaerythritol dicrotonate and sorbitol tetradicrotonate.

Examples of isocrotonate esters include ethylene glycol diisocrotonate, pentaerythritol diisocrotonate and sorbitol tetraisocrotonate.

Examples of maleate esters include ethylene glycol dimaleate, triethylene glycol dimaleate, pentaerythritol dimaleate and sorbitol tetramaleate.

Examples of other esters include esters having a 9,9-diarylfluorene skeleton described in Japanese Patent (JP-B) No. 2849021; siloxane bond-containing (meth)acrylates described in JP-A No. 08-101499 and JP-B No. 3532679; biphenyl-containing (meth)acrylates described in JP-A 2001-125474; and oligomeric (meth)acrylates described in JP-A Nos. 07-199777, 07-199779 and 07-104643. These may be used alone or in combination.

The amount of the polymerizable monomer, relative to the total solid content of a monomer supplying layer, is preferably 0.5% by mass to 50% by mass, more preferably 1% by mass to 40% by mass, and particularly preferably 2% by mass to 30% by mass. The amount of the polymerizable monomer in the monomer supplying layer is preferably more than the amount of the polymerizable monomer in the total solid content of the recording layer.

The photopolymerization initiator is not particularly limited and a variety of systems known in the art can be used. Initiator system may consist of a single compound or may consist of a plurality of compounds. A single initiator system may perform a system activating a radical polymerization and a system activating a cationic polymerization or ring-opening polymerization, or two different initiator systems may perform each system.

A photoacid-generator is preferably used as a photocationic polymerization initiator or ring-opening polymerization initiator. Examples of photoacid generators include trichloromethyl-s-triazines, diaryliodonium salts, triarylsulfonium salts, quaternary ammonium salts, and sulfonic esters.

Examples of the trichloromethyl-s-triazines include 2,4,6-tris(trichloromethyl)-s-triazine, 2-phenyl-4,6-bis(trichloromethyl)-s-triazine, 2-(4-chlorophenyl)-4,6-bis(trichloromethyl)-s-triazine, 2-(3-chlorophenyl)-4,6-bis(trichloromethyl)-s-triazine, 2-(2-chlorophenyl)-4, 6-bis(trichloromethyl)-s-triazine, 2-(4-methoxyphenyl)-4,6-bis(trichloromethyl)-s-tziazine, 2-(3-methoxyphenyl)-4,6-bis(trichloromethyl)-s-triazine, 2-(2-methoxyphenyl)-4,6-bis(trichloromethyl)-s-triazine, 2-(4-methylthiophenyl)-4,6-bis(trichloromethyl)-s-triazine, 2-(3-methylthiophenyl)-4,6-bis(trichloromethyl)-s-triazine, 2-(2-methylthiophenyl)-4,6-bis(trichloromethyl)-s-triazine, 2-(4-methoxynaphthyl)-4,6-bis(trichloromethyl)-s-triazine, 2-(3-methoxynaphthyl)-4,6-bis(trichloromethyl)-s-triazine, 2-(2-methoxynaphthyl)-4,6-bis(trichloromethyl)-s-triazine, 2-(4-methoxy-ß-styryl)-4,6-bis(trichloromethyl)-s-triazine, 2-(3-methoxy-ß-styryl)-4,6-bis(trichloromethyl)-s-triazine, 2-(2-methoxy-ß-styryl)-4,6-bis(trichloromethyl)-s-triazine, 2-(3,4,5-trimethoxy-ß-styryl)-4,6-bis(trichloromethyl)-s-triazine, 2-(4-methylthio-ß-styryl)-4,6-bis(trichloromethyl)-s-triazine, 2-(3-methylthio-ß-styryl)-4,6-bis(trichloromethyl)-s-triazine, 2-(3-methylthio-ß-styryl)-4,6-bis(trichloromethyl)-s-triazine, 2-piperonyl-4,6-bis(trichloromethyl)-s-triazine, 2-[2-(furan-2-yl)ethenyl]-4,6-bis(trichloromethyl)-s-triazine, 2-[2-(5-methylfuran-2-yl)ethenyl]-4,6-bis(trichloromethyl)-s-triazine, and 2-[2-(4-diethylamino-2-methylphenyl)ethenyl]-4,6-bis(trichloromethyl)-s-triazine.

Examples of diaryliodonium salts include diphenyliodonium tetrafluoroborate, diphenyliodonium hexafluorophosphonate, diphenyliodonium hexafluoroarsenate, diphenyliodonium trifluoromethanesulfonate, diphenyliodonium trifluoroacetate, diphenyliodonium-p-toluenesulfonate, diphenyliodonium butyltris(2,6-difluoropheny)borate, diphenyliodonium hexyltris(p-chlorophenyl)borate, diphenyliodonium hexyltris(3-trifluoromethylphenyl)borate, 4-methoxyphenylphenyliodonium tetrafluoroborate, 4-methoxyphenylphenyliodonium hexafluorophosphonate, 4-methoxyphenylphenyliodonium hexafluoroarsenate, 4-methoxyphenylphenyliodonium trifluoromethane sulfonate, 4-methoxyphenylphenyliodonium trifluoroacetate, 4-methoxyphenylphenyliodonium-p-toluene sulfonate, 4-methoxyphenylphenyliodonium butyltris(2,6-diffuorophenyl)borate, 4-methoxyphenylphenyliodonium hexyltris(p-chlorophenyl)borate, 4-methoxyphenylphenyliodonium hexyltris(3-trifluoromethylphenyl)borate, bis(4-tert-butylphenyl)iodonium tetrafluoroborate, bis(4-tert-butylphenyl)iodonium hexafluoroarsenate, bis(4-tert-butylphenyl)iodonium trifluoromethane sulfonate, bis(4-tert-butylphenyl)iodonium trifluoroacetate, bis(4-tert-butylphenyl)iodonium-p-toluene sulfonate, bis(4-tert-butylphenyl)iodonium butyltris(2,6-difluorophenyl)borate, bis(4-tert-butylphenyl)iodonium hexyltris(p-chlorophenyl)borate, and bis(4-tert-butylphenyl)iodonium hexyltris(3-trifluoromethylphenyl)borate.

Examples of triarylsulfonium salts include triphenylsulfonium tetrafluoroborate, triphenylsulfonium hexafluorophosphonate, triphenylsulfonium hexafluoroarsenate, triphenylsulfonium trifluoromethane sulfonate, triphenylsulfonium trifluoroacetate, triphenylsulfonium-p-toluene sulfonate, triphenylsulfonium butyltris(2,6-difluorophenyl)borate, triphenylsulfonium hexyltris(p-chlorophenyl)borate, triphenylsulfonium hexyltris(3-trifluoromethylphenyl)borate, 4-methoxyphenyldiphenylsulfonium tetrafluoroborate, 4-methoxyphenyldiphenylsulfonium hexafluorophosphonate, 4-methoxyphenyldiphenylsulfonium hexafluoroarsenate, 4-methoxyphenyldiphenylsulfonium trifluoromethane sulfonate, 4-methoxyphenyldiphenylsulfonium trifluoroacetate, 4-methoxyphenyldiphenylsulfonium-p-toluene sulfonate, 4-methoxyphenyldiphenylsulfonium butyltris(2,6-difluorophenyl)borate, 4-methoxyphenyldiphenylsulfonium hexyltris(p-chlorophenyl)borate, 4-methoxyphenyldiphenylsulfonium hexyltris(3-trifluommethylphenyl)borate, 4-phenylthiophenyldiphenylsulfonium tetrafluoroborate, 4-phenylthiophenyldiphenylsulfonium hexafluorophosphonate, 4-phenylthiophenyldiphenylsulfonium hexafluoroarsenate, 4-phenylthiophenyldiphenylsulfonium trifluoromethane sulfonate, 4-phenylthiophenyldiphenylsulfonium trifluoroacetate, 4-phenylthiophenyldiphenylsulfonium-p-toluene sulfonate, 4-phenylthiophenyldiphenylsulfonium butyltris(2,6-difluorophenyl)borate, 4-phenylthiophenyldiphenylsulfonium hexyltris(p-chlorophenyl)borate, 4-phenylthiophenyldiphenylsulfonium hexyltris(3-trifluoromethylphenyl)borate, 4-hydroxy-1-naphthalenyl)dimethylsulfonium tetrafluoroborate, 4-hydroxy-1-naphthalenyl)dimethylsulfonium hexafluorophosphonate, 4-hydroxy-1-naphthalenyl)dimethylsulfonium hexafluoroarsenate, 4-hydroxy-1-naphthalenyl)dimethylsulfonium trifluoromethane sulfonate, 4-hydroxy-1-naphthalenyl)dimethylsulfonium trifluoroacetate, 4-hydroxy-1-naphthalenyl)dimethylsulfonium-p-toluene sulfonate, 4-hydroxy-1-naphthalenyl)dimethylsulfonium butyltris(2,6-difluorophenyl)borate, 4-hydroxy-1-naphthalenyl)dimethylsulfonium hexyltris(p-chlorophenyl)borate and 4-hydroxy-1-naphthalenyl)dimethylsulfonium hexyltris(3-trifluoromethylphenyl)borate.

Examples of quaternary ammonium salts include tetramethylammonium tetrafluoroborate, tetramethylammonium hexafluorophosphonate, tetramethylammonium hexafluoroarsenate, tetramethylammonium trifluoromethane sulfonate, tetramethylammonium trifluoroacetate, tetramethylammonium-p-toluene sulfonate, tetramethylammonium butyltris(2,6-difluorophenyl)borate, tetramethylammonium hexyltris(p-chlorophenyl)borate, tetramethylammonium hexyltris(3-trifluoromethylphenyl)borate, tetrabutylammonium tetrafluoroborate, tetrabutylammonium hexafluorophosphonate, tetrabutylammonium hexafluoroarsenate, tetrabutylammonium trifluoromethane sulfonate, tetrabutylammonium trifluoroacetate, tetrabutylammonium-p-toluene sulfonate, tetrabutylammonium butyltris(2,6-difluorophenyl)borate, tetrabutylammonium hexyltris(p-chlorophenyl)borate, tetrabutylammonium hexyltris(3-trifluoromethylphenyl)borate, benzyltrimethylammonium tetrafluoroborate, benzyltrimethylammonium hexafluorophosphonate, benzyltrimethylammonium hexafluoroarsenate, benzyltrimethylammonium trifluoromethane sulfonate, benzyltrimethylammonium trifluoroacetate, benzyltrimethylammonium-p-toluene sulfonate, benzyltrimethylammonium butyltris(2,6-difluorophenyl)borate, benzyltrimethylammonium hexyltris(p-chlorophenyl)borate, benzyltrimethylammonium hexyltris(3-trifluoromethylphenyl)borate, benzyldimethylphenylammonium tetrafluoroborate, benzyldimethylphenylammonium hexafluorophosphonate, benzyldimethylphenylammonium hexafluoroarsenate, benzyldimethylphenylammonium trifluoromethane sulfonate, benzyldimethylphenylammonium trifluoroacetate, benzyldimethylphenylammonium-p-toluene sulfonate, benzyldimethylphenylammonium butyltris(2,6-difluorophenyl)borate, benzyldimethylphenylammonium hexyltris(p-chlorophenyl)borate, benzyldimethylphenylammonium hexyltris(3-trifluoromethylphenyl)borate, N-cinnamylideneethylphenylammonium tetrafluoroborate, N-cinnamylideneethylphenylammonium hexafluorophosphonate, N-cinnamylideneethylphenylammonium hexafluoroarsenate, N-cinnamylideneethylphenylammonium trifluoromethane sulfonate, N-cinnamylideneethylphenylammonium trifluoroacetate, N-cinnamylideneethylphenylammonium-p-toluene sulfonate, N-cinnamylideneethylphenylammonium butyltris(2,6-diffuorophenyl)borate, N-cinnamylideneethylphenylammonium hexyltris(p-chlorophenyl)borate and N-cinnamylideneethylphenylammonium hexyltris(3-triffuoromethylphenyl)borate.

Examples of sulfonic acid esters include α-hydroxymethyl benzoin-p-toluenesulfonic acid ester, α-hydroxymethylbenzoin-trifluoromethanesulfonic acid ester, α-hydroxymethylbenzoin-methanesulfonic acid ester, pyrogallol-tri(p-toluenesulfonic acid)ester, pyrogallol-tri(trifluoromethanesulfonic acid) ester, pyrogallol-trimethanesulfonic acid ester, 2,4-dinitrobenzyl-p-toluenesulfonic acid ester, 2,4-dinitrobenzyl-trifluoromethanesulfonic acid ester, 2,4-dinitrobenzyl-methanesulfonic acid ester, 2,4-dinitrobenzyl-1,2-naphthoquinonediazido-5-sulfonic acid ester, 2,6-dinitrobenzyl-p-toluenesulfonic acid ester, 2,6-dinitrobenzyl-trifluoromethanesulfonic acid ester, 2,6-dinitrobenzyl-methanesulfonic acid ester, 2,6-dinitrobenzyl-1,2-naphthoquinonediazido-5-sulfonic acid ester, 2-nitrobenzyl-p-toluenesulfonic acid ester, 2-nitrobenzyl-trifluommethanesulfonic acid ester, 2-nitrobenzyl-methanesulfonic acid ester, 2-nitrobenzyl-1,2-naphthoquinonediazido-5-sulfonic acid ester, 4-nitrobenzyl-p-toluenesulfonic acid ester, 4-nitrobenzyl-trifluoromethanesulfonic acid ester, 4-nitrobenzyl-methanesulfonic acid ester, 4-nitrobenzyl-1,2-naphthoquinonediazido-5-sulfonic acid ester, N-hydroxynaphthalimide-p-toluenesulfonic acid ester, N-hydroxynaphthalimide-trifluoromethanesulfonic acid ester, N-hydroxynaphthalimide-methanesulfonic acid ester, N-hydroxy-5-norbornene-2,3-dicarboxyimide-p-toluensulfonic acid ester, N-hydroxy-5-norbornene-2,3-dicarboxyimide-tritluoromethanesulfonic acid ester, N-hydroxy-5-norbornene-2,3-dicarboxyimide-methanesulfonic acid ester, 2,4,6,3',4',5'-hexahydroxybenzophenone-1,2-naphthoquinonediazido-4-sulfonic acid ester and 1,1,1-tri(p-hydroxyphenyl)ethane-1,2-naphthoquinonediazido-4-sulfonic acid ester.

Of these compounds, 2-(3-chlorophenyl)-4,6-bis(trichloromethyl)-s-triazine, 2-(4-methoxyphenyl)-4,6-bis(trichloromethyl)-s-triazine, 2-(4-methylthiophenyl)-4,6-bis(trichloromethyl)-s-triazine, 2-(4-methoxy-ß-styryl)-4,6-bis(trichloromethyl)-s-triazine, 2-piperonyl-4,6-bis(trichloromethyl)-s-triazine, 2-[2-(furan-2-yl)ethenyl]-4,6-bis(trichloromethyl)-s-triazine, 2-[2-(5-methylfuran-2-yl)ethenyl]-4,6-bis(trichloromethyl)-s-triazine, 2-[2-(4-diethylamino-2-methylphenyl)ethenyl]-4,6-bis(trichloromethyl)-s-triazine, and 2-(4-methoxynaphthyl)-4,6-bis(trichloromethyl)-s-triazine are preferred as trichloromethyl-s-triazines; diphenyliodonium trifluoroacetate, diphenyliodonium trifluoromethane sulfonate, 4-methoxyphenylphenyliodonium trifluoromethane sulfonate and 4-methoxyphenylphenyliodonium trifluoroacetate are preferred as diaryliodonium salts; triphenylsulfonium trifluoromethane sulfonate, triphenylsulfonium trifluoroacetate, 4-methoxyphenyldiphenylsulfonium trifluoromethane sulfonate, 4-methoxyphenyldiphenylsulfonium trifluoroacetate, 4-phenylthiophenyldiphenylsulfonium trifluoromethane sulfonate and 4-phenylthiophenyldiphenylsulfonium trifluoroacetate are preferred as triarylsulfonium salts; tetramethylammonium butyltris(2,6-difluorophenyl)borate, tetramethylammonium hexyltris(p-chlorophenyl)borate, tetramethylammonium hexyltris(3-trifluoromethylphenyl)borate, benzyldimethylphenylammonium butyltris(2,6-difluorophenyl)borate, benzyldimethylphenylammonium hexyltris(p-chlorophenyl)borate and benzyldimethylphenylammonium hexyltris(3-tritluoromethylphenyl)borate are preferred as quaternary ammonium salts; and 2,6-dinitrobenzyl-p-toluenesulfonic acid ester, 2,6-dinitrobenzyl-trifluoromethanesulfonic acid ester, N-hydroxynaphthalimide-p-toluenesulfonic acid ester and N-hydroxynaphthalimide-trifluoromethanesulfonic acid ester are preferred as sulfonic acid esters.

Examples of the compounds of the photoradical polymerization-initiating system include organic halides, carbonyl compounds, organic peroxide compounds, azo polymerization initiators, azide compounds, metalocene compounds, hexaarylbiimidazole compounds, organic boric acid compounds, disulfonic acid compounds, oxime ester compounds and onium salt compounds.

Specific examples of the organic halides include compounds described in Wakabayashi, et al., "Bull Chem. Soc. Japan", 42, 2924 (1969), U.S. Patent No. 3,905,815, Japanese Patent Application Publication (JP-B) No. 46-4605, JP-A Nos. 48-36281, 55-32070, 60-239736, 61-169835, 61-169837, 62-58241, 62-212401, 63-70243, and 63-298339, and M. P. Hutt, "Journal of Heterocyclic Chemistry", 1 (No. 3), (1970). Of these compounds, oxazole compounds and S-triazine compounds having a trihalomethyl group as a substituent are particularly preferred.

More preferred are s-triazine derivatives in which at least one mono-, di- or tri-halogen-substituted methyl group is bonded to an s-triazine ring. Specific examples thereof include 2,4,6-tris(monochloromethyl)-s-triazine, 2,4,6-tris(dichloromethyl)-s-triazine, 2,4,6-tris(trichloromethyl)-s-triazine, 2-methyl-4,6-bis(trichloromethyl)-s-triazine, 2-n-propyl-4,6-bis(trichloromethyl)-s-triazine, 2-(α,α,β-trichloroethyl)-4,6-bis(trichloromethyl)-s-triazine, 2-phenyl-4,6-bis(trichloromethyl)-s-triazine, 2-(p-methoxyphenyl)-4,6-bis(trichloromethyl)-s-triazine, 2-(3,4-epoxyphenyl)-4,6-bis(trichloromethyl)-s-triazine, 2-(p-chlorophenyl)-4,6-bis(trichloromethyl)-s-triazine, 2-[1-(p-methoxyphenyl)-2,4-butadienyl]-4,6-bis(trichloromethyl)-s-triazine, 2-styryl-4,6-bis(trichloromethyl)-s-triazine, 2-(p-methoxystyryl)-4,6-bis(trichloromethyl)-s-triazine, 2-(p-i-propyloxystyryl)-4,6-bis(trichloromethyl)-s-triazine, 2-(p-tollyl)-4,6-bis(trichloromethyl)-s-triazine, 2-(4-natoxynaphthyl)-4,6-bis(trichloromethyl)-s-triazine, 2-phenylthio-4,6-bis(trichloromethyl)-s-triazine, 2-benzylthio-4,6-bis(trichloromethyl)-s-triazine, 2,4,6-tris(dibromomethyl)-s-triazine, 2,4,6-tris(tribromomethyl)-s-triazine, 2-methyl-4,6-bis(tribromomethyl)-s-triazine and 2-methoxy-4,6-bis(tribromomethyl)-o-triazine.

Examples of carbonyl compounds include benzophenone; benzophenone derivatives such as Michler's ketone, 2-methylbenzophenone, 3-methylbenzophenone, 4-methylbenzophenone, 2-chlorobenzophenone, 4-bromobenzophenone and 2-carboxybenzophenone; acetophenone derivatives such as 2,2-dimethoxy-2-phenylacetophenone, 2,2-diethoxyacetophenone, 1-hydroxycyclohexylphenylketone, α-hydroxy-2-methylphenylpropanone, 1-hydroxy-1-methylethyl-(p-isopropylphenyl)ketone, 1-hydroxy-1-(p-dodecylphenyl)ketone, 2-methyl-(4'-(methylthio)phenyl)-2-morpholino-1-propanone and 1,1,1-trichloromethyl-(p-butylphenyl)ketone; thioxanthone; thioxanthone derivatives such as 2-ethylthioxanthone, 2-isopropylthioxanthone, 2-chlorothioxanthone, 2,4-dimethylthioxanthone, 2,4-diethylthioxanthone and 2,4-diisopropylthioxanthone; and benzoate derivatives such as ethyl p-dimethylaminobenzoate and ethyl p-diethylaminobenzoate.

As azo compounds, those described in JP-A No. 08-108621 can be used. Examples of organic peroxide compounds include trimethylcyclohexanone peroxide, acetylacetone peroxide, 1,1-bis(tert-butylperoxy)-3,3,5-trimethylcyclohexane, 1,1-bis(tert-butylperoxy)cyclohexane, 2,2-bis(tert-butylperoxy)butane, tert-butyl hydroperoxide, cumene hydroperoxide, diisopropylbenzene hydroperoxide, 2,5-dimethylhexane-2,5-dihydroperoxide, 1,1,3,3-tetramethylbutyl hydroperoxide, tert-butylcumyl peroxide, dicumyl peroxide, 2,5-dimethyl-2,5-di(tert-butylperoxy)hexane, 2,5-oxanoyl peroxide, succinic acid peroxide, benzoyl peroxide, 2,4-dichlorobenzoyl peroxide, diisopropyl peroxydicarbonate, di-2-ethylhexyl peroxydicarbonate, di-2-ethoxyethyl peroxydicarbonate, dimethoxyisopropyl peroxycarbonate, di(3-methyl-3-methoxybutyl)peroxydicarbonate, tert-butylperoxy acetate, tert-butylperoxy pivalate, tert-butylperoxy neodecanoate, tert-butylperoxy octanoate, tert-butylperoxy laurate, tertiary carbonate, 3,3',4,4'-tetra-(t-butylperoxycarbonyl)benzophenone, 3,3',4,4'-tetra-(t-hexylperoxycarbonyl)benzophenone, 3,3',4,4'-tetra-(p-isopropylcumylperoxycarbonyl)benzophenone, carbonyldi(t-butylperoxy dihydrogen diphthalate) and carbonyldi(t-hexylperoxy dihydrogen diphthalate).

Examples of metalocene compounds include various titanocene compounds described in JP-A Nos. 59-152396, 61-151197, 63-41484, 02-249, 02-4705 and 05-83588, such as di-cyclopentadienyl-Ti-bis-phenyl, di-cyclopentadienyl-Ti-bis-2,6-difluoropheny-1-yl, di-cyclopentadienyl-Ti-bis-2,4-difluoropheny-1-yl, di-cyclopentadienyl-Ti-bis-2,4,6-trifluoropheny-1-yl, di-cyclopentadienyl-Ti-bis-2,3,5,6-tetrafluoropheny-1-yl, di-cyclopentadienyl-Ti-bis-2,3,4,5,6-pentaffuoropheny-1-yl, di-methylcyclopentadienyl-Ti-bis-2,6-difluoropheny-1-yl, di-methylcyclopentadienyl-Ti-bis-2,4,6-trifluoropheny-1-yl, di-methylcyclopentadienyl-Ti-bis-2,3,5,6-tetrafluoropheny-1-yl, di-methylcyclopentadienyl-Ti-bis-2,3,4,5,6-pentafluoropheny-1-yl and iron-allene complexes described in JP-A Nos. 01-304453 and 01-152109.

Examples of hexaaryl biimidazole compounds include various compounds described in JP-B No. 06-29285, U.S. Patent Nos. 3,479,185, 4,311,783 and 4,622,286, such as 2,2'-bis(o-chlorophenyl)-4,4',5,5'-tetraphenylbiimidazole, 2,2'-bis(o-bromophenyl)-4,4',5,5'-tetraphenylbiimidazole, 2,2'-bis(o,p-dichlorophenyl)-4,4',5,5'-tetraphenylbiimidazole, 2,2'-bis(o-chlorophenyl)-4,4',5,5'-tetra(m-methoxyphenyl)biimidazole, 2, 2'-bis(o,o'-dichlorophenyl)-4,4',5,5'-tetraphenylbiimidazole, 2,2'-bis(o-nitrophenyl)-4,4',5,5'-tetraphenylbiimidazole, 2,2'-bis(o-methylphenyl)-4,4',5,5'-tetraphenylbiimidazole and 2, 2'-bis(o-trifluorophenyl)-4,4',5,5'-tetraphenylbiimidazole.

Examples of organic borate compounds include organic borate salts as described in JP-ANos. 62-143044, 62-150242, 09-188685, 09-188686, 09-188710, 2000-131837 and 2002-107916, JP-B No. 2764769, and Kunz, Martin, "Rad Tech '98. Proceedings April 19-22", 1998, Chicago"; organic boron-sulfonium complexes or organic boron-oxosulfonium complexes as described in JP-A Nos. 06-157623, 06-175564 and 06-175561; organic boron-iodonium complexes as described in JP-A Nos. 06-175554 and 06-175553; organic boron-phosphonium complexes as described in JP-A No. 09-188710; and organic boron-transition metal coordinated complexes as described in JP-A Nos. 06-348011, 07-128785, 07-140589, 07-306527 and 07-292014.

Examples of disulfone compounds include compounds as described in JP-A Nos:61 166544 and 2002-328465.

Examples of oxime ester compounds include compounds as described in J. C. S. Perkin II (1979) pp. 1653-1660, J. C. S. Perkin II (1979) pp. 156-162, Journal of Photopolymer Science and Technology (1995) pp. 202-232, and JP-A Nos. 2000-66385 and 2000-80068. Specific examples include compounds shown below.

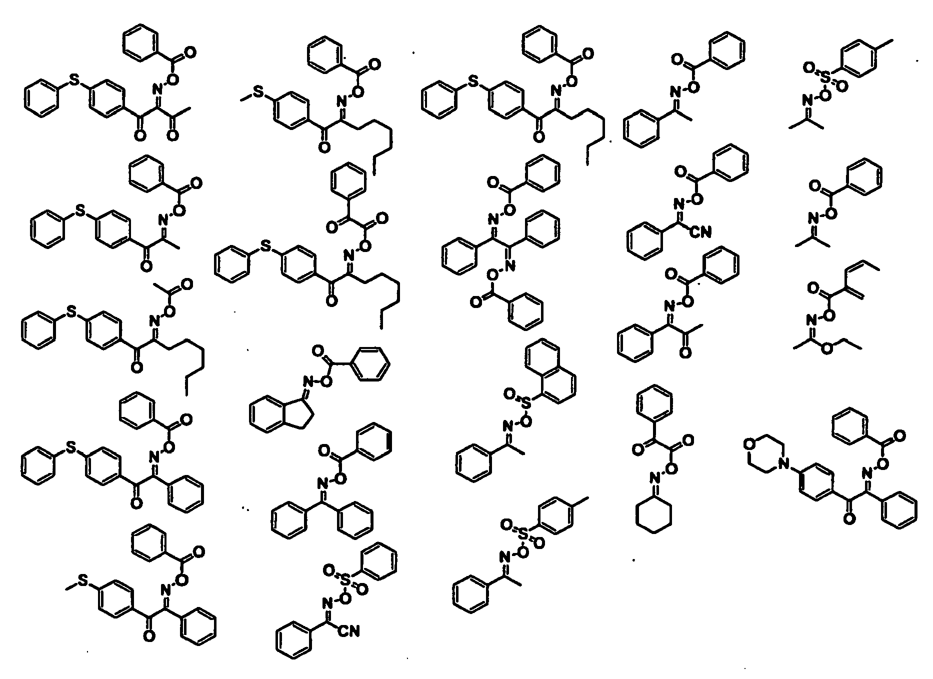

Examples of onium salt compounds include above-listed compounds as cationic polymerization initiators, diazonium salts as described in S. I. Schlesinger, "Photogr. Sci. Eng.", 18, 387 (1974) and T. S. Bal et al. "Polymer", 21, 423 (1980): ammonium salts as described in U.S. Patent No. 4,069,055 and JP-A No. 4-365049; phosphonium salts as described in U.S. Patent Nos. 4,069,055 and 4,069,056; iodonium salts as described in European Patent No. 104,143, U.S. Patent Nos. 339,049 and 410,201, JP-A Nos. 02-150848 and 02-296514; sulfonium salts as described in European Patent Nos. 370,693, 390,214, 233,567, 297,443 and 297,442, U.S. Patent Nos. 4,933,377, 161,811, 410,201, 339,049, 4,760,013, 4,734,444 and 2,833,827, and German Patent Nos. 2,904,626, 3,604,580 and 3,604,581; selenonium salts as described in J. V. Crivello et al., "Macromolecules", 10 (6), 1307 (1977) and J. V. Crivello et al., "J. Polymer Sci., Polymer Chem. Ed.", 17, 1047 (1979); and arsonium salts as described in C. S. Wen et al., "Teh, Proc. Conf. Rad. Curing ASIA", p. 478, Tokyo, Oct. (1988).

Of these compounds, from the viewpoints of reactivity and stability, oxime ester compounds, diazonium salts, iodonium salts and sulfonium salts are particularly preferred. In the present invention, these onium salts act as a cationic polymerization initiator, and also act as an ionic radical polymerization initiator. This property enables a single compound to activate both cationic polymerization and radical polymerization.

In order to further sensitize the polymerization initiator, a sensitizer may be added. Examples of sensitizers include coumarins having a substituent(s) at position(s) 3 and/or 7, flavones, dibenzalacetones, dibenzalcyclohexanes, chalcones, xanthenes, thioxanthenes, porphyrins, phthalocyanines, acridines and anthracenes.

The amount of the photopolymerization initiator is preferably 0.1% by mass to 10% by mass, more preferably 1% by mass to 7% by mass, still more preferably 1.5% by mass to 5% by mass, relative to the total mass of the recording layer. In this range, the recording layer having excellent sensitivity and multiplicity can be obtained. When the content is less than 0.1% by mass, sensitivity may not be sufficiently obtained. When the content is more than 10% by mass, a reference or signal light is unnecessarily absorbed, resulting in failure to obtain sufficient signal intensity to be read.

Other components are not particularly limited and may be appropriately selected depending on the purpose. Examples thereof include various kinds of additives such as infrared ray heat conversion agents and swelling agents.

The thickness of the recording layer is not particularly limited and may be appropriately selected depending on the purpose. It is preferably 1 µm to 1,000 µm, and more preferably 100 µm to 700 µm. When the thickness of the recording layer falls within the preferable range, a satisfactory S/N ratio can be obtained even when 10 to 300 fold multiplex recording such as shift multiplex recording or angle multiplex recording is performed. When the thickness of the recording layer falls within the more preferable range, it is advantageous in that a satisfactory S/N ratio can be outstanding.

### -Substrate-

The shape, structure, size, etc. of the substrate are not particularly limited and may be appropriately selected depending on the purpose. The substrate has a shape of, for example, disc, flat card or sheet. The structure of the substrate may be a single-layer structure or a laminated structure. The size thereof may be appropriately determined in consideration of the size of an intended optical recording medium.

The material used for the substrate is not particularly limited, as long as it ensures the mechanical strength of an optical recording medium, and any of an inorganic and an organic material are preferably used. In case of an optical recording medium of transmission type, in which recording and reproducing beams enter through a substrate, the substrate material must exhibit sufficient transparency in a range of wavelengths of light employed.

Examples of the inorganic materials include glass, quartz and silicon.

Examples of the organic materials include acetate resins (e.g., triacetyl cellulose), polyester resins, polyether sulfone resins, polysulfone resins, polycarbonate resins, polyamide resins, polyimide resins, polyolefin resins, acrylic resins, polynorbornene resins, cellulose resins, polyarylate resins, polystyrene resins, polyvinyl alcohol resins, polyvinyl chloride resins, polyvinylidene chloride resins, polyacrylic resins, polylactic acid resins, plastic film laminated paper and synthetic paper. These may be used alone or in combination. Of these, from the viewpoints of moldability, optical properties and cost, polycarbonate resins and acrylic resins are preferred.

The substrate may be appropriately synthesized or may be commercially available one. The thickness of the substrate is not particularly limited and may be appropriately determined depending on the purpose. The thickness is preferably 0.1 mm to 5 mm, and more preferably 0.3 mm to 2 mm. When the thickness is less than 0.1 mm, disc deformation during storage cannot be prevented. When the thickness is more than 5 mm, the total mass of the disc increases, and an excessive load may be applied when the disc is rotated by a drive motor or the like.

The substrate is provided, on a surface thereof, with a plurality of address-servo areas at predetermined angle intervals, which serve as a positioning area and extend linearly in the radial direction, and fan-shaped areas between adjacent address-servo areas are data areas. In the address-servo areas, address information and information for carrying out focus servo control and tracking servo control by a sampled servo method are recorded in advance (pre-formatted) in the form of embossed pits (servo pits). The focus servo can be controlled using the reflection surface of a reflective film. The information for carrying out tracking servo control may be, for example, wobble pits.

### -Reflective film-

The reflective film is formed on a surface of the servo pit pattern in the substrate.

The reflective film is preferably formed of a material having high reflectance relative to a recording beam and a reference beam. When light having a wavelength of 400 nm to 780 nm is used, the film is preferably formed of, for example, Al, Al alloys, Ag or Ag alloys. When light having a wavelength of 650 nm or more, the film is preferably formed of, for example, Al, Al alloys, Ag, Ag alloys, Au, Cu alloys or TiN.

In an optical recording medium (e.g., a DVD (digital video disc)) which contains a reflective film for reflecting light and is capable of carrying out information-recording or information-erasing, directory information, which is in relation to, for example, up to which area a hologram is recorded, when holographic images are rewritten, where an error resides and how a replacement processing is carried out, can be recorded or rewritten without affecting holograms.

The method for forming the reflective film is not particularly limited and may be appropriately selected depending on the purpose. Examples of the methods include various vapor deposition methods such as vacuum deposition methods, spattering methods, plasma CVD methods, photo-CVD methods, ion plating methods and electron beam deposition methods. Of these, spattering methods are excellent in terms of mass-productivity and film quality.

The thickness of the reflective film is preferably 50 nm or more, and more preferably 100 nm or more, for the purpose of ensuring sufficient reflectance.

### -Selective reflection layer-

The selective reflection layer is formed on the servo pits in the substrate or on the reflective layer.

The selective reflection layer has the function of reflecting only light with a specific wavelength contained in those with different wavelengths; i.e., selectively reflecting light wavelength. In addition, since the selective reflection layer can reflect light even when the incident angle of the light is changed, this layer has the function of preventing occurrence of noise by blocking an information or reference beam diffused on the reflective film of the optical recording medium. Thus, a selective reflection layer-containing optical recording medium exhibits optical recording performance having high resolution and high diffraction efficiency.

The selective reflection layer is not particularly limited and may be appropriately selected depending on the purpose. For example, the selective reflection layer is a laminated product formed by laminating at least any of a dichroic mirror layer, a coloring material-containing layer, a dielectric deposition layer, a single layer or two or more layers of cholesteric layer(s) and other layers appropriately selected as necessary.

The selective reflection layer is formed by coating directly on the substrate together with, for example, the recording layer. Alternatively, the selective layer is separately formed on a base such as a film, and then the formed layer is laminated on the substrate.

### <Other layers>

The other layers are not particularly limited and may be appropriately selected depending on the purpose. Examples thereof include a first gap layer and a second gap layer.

### -First gap layer-

The first gap layer is optionally provided between the selective reflection layer and the reflective film for the purpose of smoothing a surface of a second substrate. Moreover, the first gap layer is effective for adjusting the size of a hologram formed in the recording layer. Specifically, a region where an information beam and a reference beam interfere with each other is required to be adjusted so as to have an appropriate size in the recording layer, and therefore, a gap is advantageously provided between the recording layer and the servo pit pattern.

The first gap layer may be formed by, for example, coating a UV curable resin or the like on the servo pit pattern by spin coating or a similar technique, and by curing the coated resin. Alternatively, when a filter layer is formed on a transparent base by coating, the transparent base also serves as the first gap layer.

The thickness of the first gap layer is not particularly limited and may be appropriately selected depending on the purpose. Preferably, the thickness is 1 µm to 100 µm.

### -Second gap layer-

The second gap layer is provided between the recording layer and the selective reflection layer as necessary. The second gap layer is formed for preventing decrease in multiplex recording ability caused by overconsumption of monomers which occurs when light is excessively applied to photopolymers present in a point at which information and reference beams focus.

The material for forming the second gap layer is not particularly limited and may be appropriately selected depending on the purpose. Examples thereof include transparent resin films formed by, for example, triacetyl cellulose (TAC), polycarbonate (PC), polyethylene terephthalate (PET), polystyrene (PS), polysulfone (PSF), polyvinyl alcohol (PVA) and polymethyl methacrylate (PMMA); and norbornene resin films such as a ARTON film (product name, manufactured by JSR Corp.) and a ZEONOA (product name) film (manufactured by Nippon Zeon). Of these films, those having high isotropy are preferred, and a TAC film, PC film, ARTON film and ZEONOA film are particularly preferred.

The thickness of the second gap layer is not particularly limited and may be appropriately selected depending on the purpose. The thickness is preferably 1 µm to 200 µm.

Referring now to the drawings, the optical recording medium of the present invention will be described in more detail.

FIG. 2 is a schematic cross-sectional view of a configuration of an optical recording medium in an embodiment of the present invention. The optical recording medium 21 of this embodiment includes a first substrate 1 made of a polycarbonate resin, a servo pit pattern 3 formed in the first substrate 1, and a reflective film 2 formed on the servo pit pattern 3 by coating Al, Au, Pt or the like.

In the optical recording medium shown in FIG. 2, the servo pit pattern 3 is formed in the entire surface of the first substrate 1, and the pattern may be formed periodically. The height of each servo pit of the pattern is up to 1,750 angstroms (175 nm), which is much smaller than the thickness of the first substrate or other layers.

The surface of the first substrate having servo pits is provided with the dichroic mirror layer serving as a selective reflection layer 6, which is formed of Ag multilayer by vapor deposition.

A recording layer 4 is formed on the selective reflection layer 6. The optical recording medium 21 includes a selective reflection film 6 and the recording layer 4 which are sandwiched between a first substrate 1 and a second substrate 5 (polycarbonate resin-substrate).

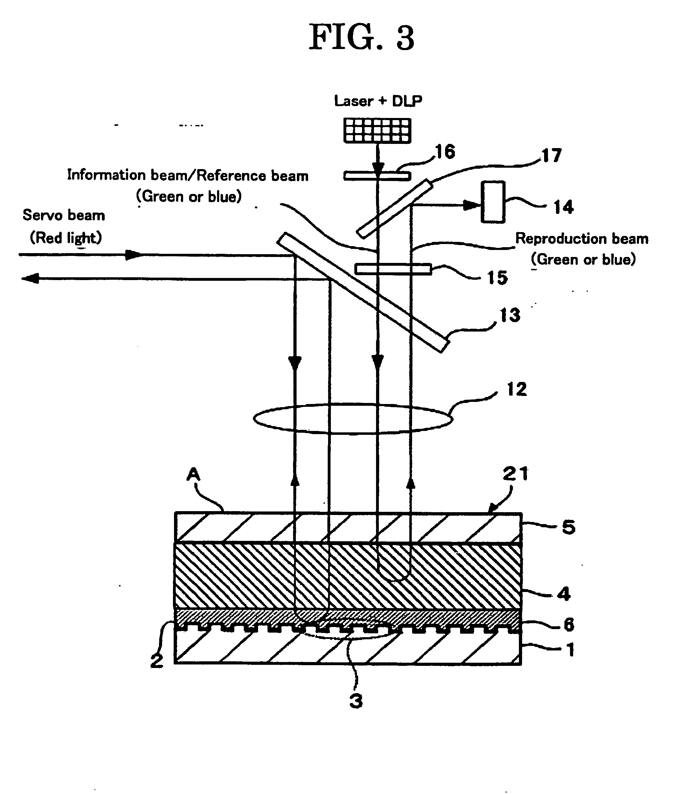

With reference to FIG. 3, next will be described optical operations carried out around the optical recording medium 21. Firstly, a beam (red light) is emitted from a servo laser, and almost 100% of the beam is reflected on a dichroic mirror 13 and then passed through an objective lens 12. The servo beam is adjusted by the objective lens 12 so as to be focused on a reflective film 2 of the optical recording medium 21. The dichroic mirror 13 allows transmission of light of green or blue wavelength, and reflects almost 100% of light of red wavelength. The servo beam is incident from a light-enter/emit surface A of the optical recording medium 21 and passes through the second substrate 5, the recording layer 4 and the selective reflection layer 6, and is reflected on the reflective film 2. The reflected beam passes again through the selective reflection layer 6, the recording layer 4 and the second substrate 5, and emits from the light-enter/emission surface A. The thus returned light passes through the objective lens 12, and almost 100% thereof is reflected on the dichroic mirror 13, and then servo information is detected by a servo information detector (not shown). The detected servo information is used for a focus servo operation, a tracking servo operation, a slide servo operation and the like. Since the hologram material forming the recording layer 4 is not sensitive to red light, even when the servo beam passes through the recording layer 4 or is diffusively reflected on the reflective film 2, the recording layer 4 is not adversely affected. In addition, since almost 100% of the returned servo beam, which has been reflected on the reflective film 2, is reflected on the dichroic mirror 13, the servo beam is not detected by a CMOS sensor or a CCD 14 used for detecting a reproduced image, and thus does not become noise with respect to a reproduction beam.

Separately, an information beam and a reference beam for recording are generated by a recording/reproducing laser. These beams are linearly polarized after passing through a polarizing plate 16. The linearly polarized lights circularly polarized after passing through a half mirror 17 and a quarter wave plate 15. The circularly polarized lights pass through the dichroic mirror 13. Thereafter, these lights are adjusted by an objective lens 12 so that the information beam and the reference beam for recording form an interference pattern in the recording layer 4 of the optical recording medium 21. Specifically, the information beam and the reference beam for recording are incident from the light-enter/emit surface A and interfere with each other in the recording medium 4 to thereby form an interference pattern therein. Subsequently, these beams enter into the selective reflection layer 6 under the recording layer 4, and returned by reflection at a position above the bottom surface of the selective reflection layer 6. In other words, the information beam and the reference beam for recording do not reach the reflective film 2. This is because the selective reflection layer 6 has a property to allow transmission of only red light.

### (Optical Recording and Reproducing Apparatus and Optical Rewording and Reproducing Method)

An optical recording and reproducing apparatus of the present invention contains at least a unit for treating an optical recording medium of the present invention, recording unit, reproducing unit, and further contains other units as necessary.

An optical recording and reproducing method of the present invention includes at least a step of treating an optical recording medium of the present invention, recording step, reproducing step, and further includes other steps as necessary.

The optical recording and reproducing method of the present invention can be preferably performed by using the optical recording and reproducing apparatus of the present invention.

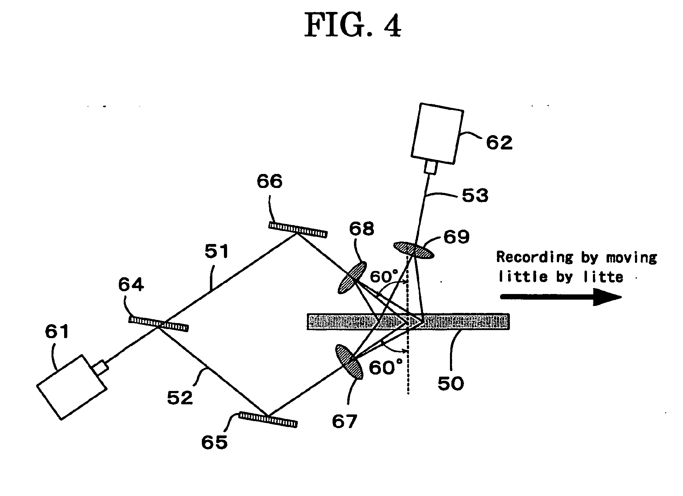

Here, the optical recording and reproducing apparatus of the present invention will be explained with reference to FIG. 4. The optical recording and reproducing apparatus shown in FIG. 4 is an example of a typical holographic recording and reproducing apparatus in which an optical recording medium is irradiated with information beam and reference beam respectively from different directions.

As shown in FIG. 4, the beam from a light source 61 is split into two rays, one forming information beam 51 that passed through a half mirror 64, and one forming a reference beam 52 reflected by the half mirror 64. The information beam 51 is expanded through a mirror 66 and a beam expander 68, and is shined on the recording layer of an optical recording medium 50. The reference beam 52 is expanded through a mirror 65 and a beam expander 67, and is shined on a surface of the recording layer opposite to the surface on which information beam 51 is shined. In this way the information beam 51 and reference beam 52 create an interference fringe, which is recorded on the recording layer as optical information.

Using this recording method, recording is repeated by moving the optical recording medium 50 little by little as shown in FIG. 4, enabling multiplex recording in the optical recording medium 50.

The treating unit of the present invention containing the light diffusion member is provided adjacent to at least any of light sources 61 and 62 (not shown).

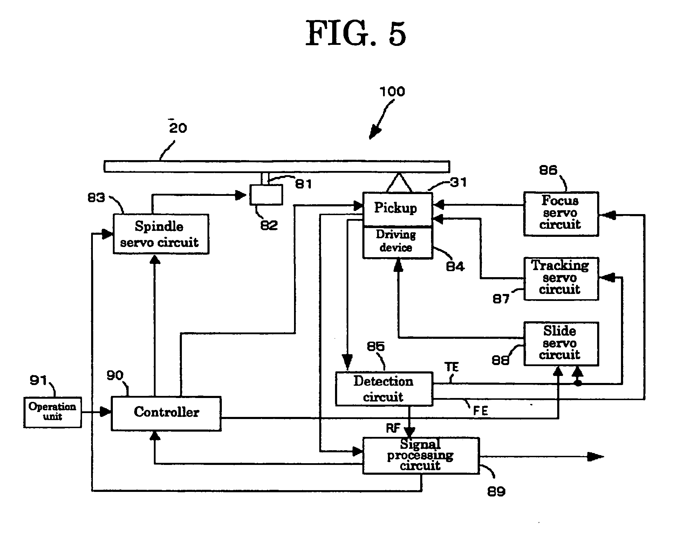

FIG. 5 shows the entire configuration of an optical recording and reproducing apparatus of an embodiment of the present invention.

The optical recording and reproducing apparatus 100 includes a spindle 81 to which an optical recording medium 20 is mounted, a spindle motor 82 for rotating the spindle 81, and a spindle servo circuit 83 for controlling the spindle motor 82 so that the rotation speed of the optical recording medium 20 is maintained at a predetermined level.

In addition, the optical recording and reproducing apparatus 100 further includes a pickup 31 and a drive device 84. The pickup 31 is used for recording information by applying an information beam and a reference beam to the optical recording medium 20; and for reproducing information recorded in the optical recording medium 20 by applying a reference beam for reproduction to the optical recording medium 20 and by detecting a reproduction beam (light). The drive device 84 enables the pickup 31 to move in the radial direction of the optical recording medium 20.

The treating unit of the present invention having the light diffusion member is provided adjacent to the pickup 31 (not shown).

The optical recording and reproducing apparatus 100 further includes a detection circuit 85, a focus servo circuit 86, a tracking servo circuit 87 and a slide servo circuit 88. The detection circuit 85 is for detecting a focus error signal FE, a tracking error signal TE and a reproduction signal RF from signals output from the pickup 31. The focus servo circuit 86 carries out a focus servo operation by driving an actuator provided inside the pickup 31, on the basis of the focus error signal FE detected by the detection circuit 85, so as to move an objective lens (not shown) in the thickness direction of the optical recording medium 20. The tracking servo circuit 87 carries out a tracking servo operation by driving an actuator provided inside the pickup 31, on the basis of the tracking error signal TE detected by the detection circuit 85, so as to move the objective lens in the radial direction of the optical recording medium 20. The slide servo circuit 88 carries out a slide servo operation by controlling the drive device 84, on the basis of the tracking error signal TE and commands from a controller (described below), so as to move the pickup 31 in the radial direction of the optical recording medium 20.

The optical recording and reproducing apparatus 100 further includes a signal processing circuit 89, a controller 90 and an operation unit 91. The signal processing circuit 89 decodes data output from a CMOS or a CCD array (described below) in the pickup 31 so as to reproduce data recorded in a data area of the optical recording medium 20. In addition, this circuit creates a reference clock on the basis of a reproduction signal RF detected by the detection circuit 85; and distinguishes individual addresses. The controller 90 controls the overall optical recording and reproducing apparatus 100. The operation unit 91 gives a variety of commands to the controller 90. The controller 90, furthermore, receives the reference clock and address information output from the signal processing circuit 89, and controls, for example, the pickup 31, the spindle servo circuit 83 and the slide servo circuit 88. The spindle servo circuit 83 receives the reference clock output from the signal processing circuit 89. The controller 90 includes a CPU (central processing unit), a ROM (read only memory) and a RAM (random access memory), and the CPU realizes the function of the controller 90 by executing programs stored in the ROM on the RAM serving as a working area.

An optical recording and reproducing apparatus of the present invention contains a device for treating an optical recording medium of the present invention, enabling to subject a thick recording layer which has recorded information using volume holography to insensitization without degrading information, thereby enabling to enhance long-term storage property and durability against repetitive reproduction of a recorded image.

The present invention can solve the conventional problems and provide the method for treating an optical recording medium and device for treating an optical recording medium, in which an optical recording medium having a thick recording layer which has recorded information using holography is subjected to insensitization without degrading information, thereby enabling to enhance long-term storage property and durability against repetitive reproduction of a recorded image, and provide the optical recording and reproducing apparatus containing the device for treating an optical recording medium.

### Examples

Hereinafter, Examples of the present invention will be explained, which should not be construed to limit the present invention.

### (Production Example 1)

### - Production of optical recording medium -

A write-once read-many (WORM) optical recording medium was produced by laminating a first substrate, a reflective layer, an adhesive layer, (a first gap layer), a selective reflection layer, a protective layer (a second gap layer), a recording layer and a second substrate.

### -- Production of second substrate --

The second substrate was produced from a polycarbonate resin so as to have a diameter, inner diameter and thickness of 120 mm, 15 mm and 0.6 mm, respectively.

### -- Production of first substrate --

The first substrate used was a polycarbonate resin-substrate having a diameter, inner diameter and thickness of 120 mm, 15 mm and 0.6 mm, respectively, which was generally used for DVD+RW. This substrate had a surface with a servo pit pattern having a track pitch, pit depth and pit width of 0.74 µm, 140 nm and 300 nm, respectively.

Firstly, the reflective layer was formed on the surface of the servo pit pattern of the first substrate. Specifically, the reflective layer was formed from Ag by DC magnetron sputtering so as to attain a thickness of 150 nm.

Thereafter, on the Ag reflective layer an adhesive (SD640, manufactured by DIC Corporation) was spin coated so as to form an adhesive layer having a thickness of 20 um, and then the selective reflection layer (a first gap layer) produced as described below was formed thereon.

### -- Production of selective reflection layer --

On a polycarbonate film (product name: UPIRON manufactured by MITSUBISHI GAS CHEMICAL CO., INC.) having a thickness of 100 µm, 30 Ag films were vapor-deposited by DC magnetron sputtering, to thereby form a dichroic mirror layer having a thickness of 3 µm. Subsequently, the thus obtained dichroic mirror layer was punched out so as to have the same disc-shape as the first substrate to be laminated with the dichroic mirror layer.

### <Preparation of coating liquid for recording layer>

Coating liquids for forming a holographic recording layer consisting of the following composition were prepared separately in Tank A and Tank B under nitrogen atmosphere. Dry nitrogen was filled in the tanks after the coating liquids were prepared.

### Tank A:

- Biuret trimer of hexamethylene diisocyanate: 292.0 g
- Hexamethylene diisocyanate: 97.4 g
- Tribromophenyl acrylate: 64.22 g
- IRGACURE 784 (manufactured by Chiba Specialty Chemicals KK): 14 g
- 3,5-Ditertialybutyl-4-hydroxytoluene: 210 mg

### Tank B:

- POLYFOX T (Omnova Solutions, Inc.): 817.9 g
- Polypropyleneoxide triol (average molecular mass: 1,000): 517.9 g
- Tertialybutyl peroxide: 580 µL
- Tin dibutyllaurate: 10.2 g

### -- Lamination of layers for optical recording medium --

The disc-shaped selective reflection layer was bonded onto the first substrate over which the reflective layer and the adhesive layer (first gap layer) were formed. Specifically, bonding of the selective reflection layer was carried out such that the base film surface thereof faced the servo pit pattern and that no air bubbles existed between the layer and the substrate. Thus, the selective reflection layer was formed on the first substrate.

Thereafter, a composition for protective layer containing an adhesive (SD640, manufactured by DIC Corporation) was coated on the selective reflection layer by spin coating so as to have a thickness of 20 µm, to thereby form the protective layer (second gap layer).

While 10 parts by mass of the composition prepared in Tank A and 18 parts by mass of the composition prepared in Tank B were mixed using POSIRATIO (an apparatus for mixing and dispensing liquid, manufactured by Liquid Control Limited), the mixed composition was injected into a 500 µm space between the second substrate and thus-laminated first substrate. The composition spontaneously cured to form a recording layer having a thickness of 500 µm thereby producing an optical recording medium of Production Example 1.

### (Example 1)

An S/N ratio was obtained by recording and reproducing information in the optical recording medium produced in Production Example 1 by a co-linear optical recording and reproducing tester (SHOT-2000 manufactured by Pulstec Industrial Co.), and an image quality of a reproduced image was visually evaluated based on the following criteria.

Thereafter, the optical recording medium was once removed from the apparatus, and placed on a matt black rubber plate with a recording surface of the optical recording medium facing up, and a light diffusion filter (OPALUS ZD-097, manufactured by KEIWA Inc. haze = 81.9%) as a light diffusion member and a transparent glass plate were placed thereon, and then the optical recording medium was subjected to insensitization by irradiating with a treatment light through an optical filter (manufactured by Optical Coatings Japan, Δλ/2 = 155nm, T% = 95%, λ₀ = 545nm) from above the transparent glass plate by means of a xenon lamp (UXL-2500-O manufactured by USHIO INC., output : 2.5kW) for 8,000 sec. The total amount of light exposure was 30,000 mJ/cm². The half width of wavelength for an energy intensity of the treatment light is 155 nm.

Next, the optical recording medium which had been subjected to insensitization was mounted again on the co-linear optical recording and reproducing tester, and reproduced the recorded information to thereby obtain an S/N ratio and evaluate an image quality of a reproduced image based on the following criteria.

Moreover, a reproduction beam (wavelength of 532 nm) was continuously applied to the optical recording medium at a reproduced signal position so that the total amount of light exposure was 100 J/cm². Next, the recorded information was reproduced again to thereby obtain an S/N ratio and evaluate an image quality of a reproduced image based on the following criteria. The results are respectively shown in Table 1.

### <Evaluation Criteria of Reproduced Image>

A: Excellent reproduced image was obtained.
B: Failure, but presence of a reproduced image was confirmed.
C: Reproduction could not be performed at all.

### (Example 2)

Reproduction evaluations of the optical recording medium before and after insensitization treatment, and after irradiation with a reproduction beam were performed in the same manner as in Example 1, except that the total amount of light exposure in Example 1 was change to 10,000 J/cm². The results are shown in Table 1. The half width of wavelength for an energy intensity of the treatment light is 155 nm.

### (Example 3)

Reproduction evaluations of the optical recording medium before and after insensitization treatment, and after irradiation with a reproduction beam were performed in the same manner as in Example 1, except that the light source was changed from the xenon lamp in Example 1 to an LED array (wavelength of 532 nm). The results are shown in Table 1. The half width of wavelength for an energy intensity of the treatment light is 155 nm.

### (Example 4)

Reproduction evaluations of the optical recording medium before and after insensitization treatment, and after irradiation with a reproduction beam were performed in the same manner as in Example 3, except that the total amount of light exposure in Example 3 was changed to 10,000 J/cm². The results are shown in Table 1. The half width of wavelength for an energy intensity of the treatment light is 155 nm.

### (Example 5)

Reproduction evaluations of the optical recording medium before and after insensitization treatment, and after irradiation with a reproduction beam were performed in the same manner as in Example 1, except that an optical filter (manufactured by Optical Coatings Japan, central wavelength of 542 nm, half width of 35 nm, T% = 85%) was used instead of the transparent glass plate in Example 1. The results are shown in Table 1.

### (Example 6)

Reproduction evaluations of the optical recording medium before and after insensitization treatment, and after irradiation with a reproduction beam were performed in the same manner as in Example 5, except that the total amount of light exposure in Example 5 was change to 10,000 J/cm². The results are shown in Table 1.

### (Example 7)

Reproduction evaluations of the optical recording medium before and after insensitization treatment, and after irradiation with a reproduction beam were performed in the same manner as in Example 1, except that a light diffusion filter (manufactured by KEIWA Inc. OPALUS PBS-050, haze = 72.9%) as a light diffusion member was used. The results are shown in Table 1.

### (Comparative Example 1)

Reproduction evaluations of the optical recording medium before and after insensitization treatment, and after irradiation with a reproduction beam were performed in the same manner as in Example 1, except that the light diffusion filter in Example 1 was removed. The results are shown in Table 1.

### (Comparative Example 2)

Reproduction evaluations of the optical recording medium before and after insensitization treatment, and after irradiation with a reproduction beam were performed in the same manner as in Example 2, except that the light diffusion filter in Example 2 was removed. The results are shown in Table 1.

### (Comparative Example 3)

Reproduction evaluations of the optical recording medium before and after insensitization treatment, and after irradiation with a reproduction beam were performed in the same manner as in Example 3, except that the light diffusion filter in Example 3 was removed. The results are shown in Table 1.

### (Comparative Example 4)

Reproduction evaluations of the optical recording medium before and after insensitization treatment, and after irradiation with a reproduction beam were performed in the same manner as in Example 4, except that the light diffusion filter in Example 4 was removed. The results are shown in Table 1.

### (Comparative Example 5)

Reproduction evaluations of the optical recording medium before and after insensitization treatment, and after irradiation with a reproduction beam were performed in the same manner as in Example 5, except that the light diffusion filter in Example 5 was removed. The results are shown in Table 1.

### (Comparative Example 6)

Reproduction evaluations of the optical recording medium before and after insensitization treatment, and after irradiation with a reproduction beam were performed in the same manner as in Example 6, except that the light diffusion filter in Example 6 was removed. The results are shown in Table 1.

### (Comparative Example 7)

Reproduction evaluations of the optical recording medium before and after irradiation with a reproduction beam were performed in the same manner as in Example 1, except that insensitization treatment was not performed and reproduction beam (wavelength of 532 nm) was continuously applied so that the total amount of light exposure was 100 J/cm². The results are shown in Table 1.

### (Comparative Example 8)

Reproduction evaluations of the optical recording medium before and after insensitization treatment, and after irradiation with a reproduction beam were performed in the same manner as in Example 1, except that a light diffusion filter (manufactured by KEIWA Inc. OPALUS #100-BMU3S, haze = 51%) as a light diffusion member was used. The results are shown in Table 1.

**Table 1**

| | Immediately after recording information (before insensitization treatment) | | After insensitization treatment | | After irradiation with reproduction beam | |
|---|---|---|---|---|---|---|
| | Reproduced image | S/N ratio | Reproduced image | S/N ratio | Reproduced image | S/N ratio |
| Ex. 1 | A | 5.6 | A | 1.8 | A | 1.7 |
| Ex. 2 | | | A | 2.1 | A | 1.8 |
| Ex. 3 | | | A | 3.2 | A | 2.6 |
| Ex. 4 | | | A | 3.1 | A | 2.1 |
| Ex. 5 | | | A | 2.8 | A | 2.2 |
| Ex. 6 | | | A | 2.8 | A | 1.9 |
| Ex. 7 | | | A | 2.2 | A | 2.1 |
| Comp. Ex. 1 | | | C | - | - | - |
| Comp. Ex. 2 | | | B | 1.0 | - | - |
| Comp. Ex. 3 | | | B | 0.8 | - | - |
| Comp. Ex. 4 | | | B | 1.2 | - | - |
| Comp. Ex. 5 | | | C | - | - | - |
| Comp. Ex. 6 | | | C | - | - | - |
| Comp. Ex. 7 | | | N/A | | - | - |
| Comp. Ex. 8 | | | C | - | - | - |

| | | | | | | |
|---|---|---|---|---|---|---|
| * In Table 1, "-" in Comparative Examples 1 to 8 means that the reproduced image or S/N ratio cannot be obtained due to significant signal degradation. | | | | | | |

From the results of Table 1, it is estimated that reproduction durability is improved by insensitization treatment in comparison of Examples 1 to 7 with Comparative Example 7.

From the comparison between Examples 1 to 7 and Comparative Examples 1 to 6, it is estimated that the signal degradation is remarkably effectively prevented by diffusing light from the light source using the light diffusion filter.

From the comparison between Examples 1, 3 and 5, it is estimated that the narrower the range of wavelength of light to be applied is, the more satisfactorily the signal degradation can be prevented. Moreover, it is estimated that the optical recording medium is supplied with large energy during insensitization treatment, so that durability to light exposure (reproduction beam and surrounding light) after insensitization treatment is outstandingly enhanced, and that the optical recording medium obtains a state suitable for repetitive reproduction and long-term storage property of information.

As can be seen from the results of Examples 1 and 7, and Comparative Example 8, it is confirmed that the light diffusion filter having a haze of 70% to 100% is effective.

### Industrial Applicability

A method and device for treating an optical recording medium of the present invention can treat a recording layer which has recorded information by subjecting it to insensitization without degrading information, and can enhance long-term storage property and durability against repetitive reproduction of a recorded image, thereby used for various types of volume holographic optical recording media capable of high-density image recording.

## Claims

1. A method for treating an optical recording medium (21) comprising:
irradiating a recording layer (4), which has recorded information, with a treatment light through a light diffusion member the optical recording medium (21) comprising at least the recording layer (4) which records information using holography,
**characterized in that**
the light diffusion member has a haze of 70% to 100%.

2. The method for treating an optical recording medium according to Claim 9, wherein a half width of wavelength for an energy intensity of the treatment light is 5 nm to 700 nm.

3. The method for treating an optical recording medium (21) according to any one of Claims 1 to 2, wherein the optical recording medium (21) is a write-once read-many optical recording medium.

4. An optical recording and reproducing method comprising the method for treating an optical recording medium (21) according to any one of Claims 1 to 3.

5. A device for treating an optical recording medium (21) comprising:
a light source for a treatment light, and
a light diffusion member disposed between the light source and the optical recording medium (21) comprising at least a recording layer (4) which records information using holography,
the recording layer (4) which has recorded information being irradiated with the treatment light through the light diffusion member from the light source
**characterized in that**
the light diffusion member has a haze of 70% to 100%.

6. The device for treating an optical recording medium (21) according to Claim 5, wherein a half width of wavelength for an energy intensity of the treatment light is 5 nm to 700 nm.

7. The device for treating an optical recording medium (21) according to any one of Claims 5 to 6, wherein the optical recording medium (21) is a write-once read-many optical recording medium.

8. An optical recording and reproducing apparatus (100) comprising the device for treating an optical recording medium (21) according to any one of Claims 5 to 7.

## Patentansprüche

1. Verfahren zum Behandeln eines optischen Aufzeichnungsmediums (21), das umfasst:
Bestrahlen einer Aufzeichnungsschicht (4), die aufgezeichnete Informationen aufweist, mit einem Behandlungslicht durch ein Lichtdiffusionselement hindurch, wobei das optische Aufzeichnungsmedium (21) wenigstens die Aufzeichnungsschicht (4) umfasst, die Informationen unter Verwendung von Holografie aufzeichnet,
**dadurch gekennzeichnet, dass**
das Lichtdiffusionselement eine Trübung von 70 % bis 100 % aufweist.

2. Verfahren zum Behandeln eines optischen Aufzeichnungsmediums nach Anspruch 1, wobei eine Halbwellenlänge für eine Energie-Intensität des Behandlungslichtes 5 nm bis 700 nm beträgt.

3. Verfahren zum Behandeln eines optischen Aufzeichnungsmediums (21) nach einem der Ansprüche 1 bis 2, wobei das optische Aufzeichnungsmedium (21) ein einmal beschreibbares und mehrfach lesbares optisches Aufzeichnungsmedium ist.

4. Optisches Aufzeichnungs-und-Wiedergabeverfahren, das das Verfahren zum Behandeln eines optischen Aufzeichnungsmediums (21) nach einem der Ansprüche 1 bis 3 umfasst.

5. Einrichtung zum Behandeln eines optischen Aufzeichnungsmediums (21), das umfasst:
eine Lichtquelle für ein Behandlungslicht, und
ein Lichtdiffusionselement, das zwischen der Lichtquelle und dem optischen Aufzeichnungsmedium (21) angeordnet ist, das wenigstens eine Aufzeichnungsschicht (4) umfasst,
die Informationen unter Verwendung von Holografie aufzeichnet,
wobei die Aufzeichnungsschicht (4), die aufgezeichnete Informationen aufweist, von der Lichtquelle über das Lichtdiffusionselement mit dem Behandlungslicht bestrahlt wird,
**dadurch gekennzeichnet, dass**
das Lichtdiffusionselement eine Trübung von 70 % bis 100 % aufweist.

6. Einrichtung zum Behandeln eines optischen Aufzeichnungsmediums (21) nach Anspruch 5, wobei eine Halbwellenlänge für eine Energie-Intensität des Behandlungslichtes 5 nm bis 700 nm beträgt.

7. Einrichtung zum Behandeln eines optischen Aufzeichnungsmediums (21) nach einem der Ansprüche 5 oder 6, wobei das optische Aufzeichnungsmedium (21) ein einmal beschreibbares und mehrfach lesbares optisches Aufzeichnungsmedium ist.

8. Optische Aufzeichnungs-und-Wiedergabe-Vorrichtung (100), die die Einrichtung zum Behandeln eines optischen Aufzeichnungsmediums (21) nach einem der Ansprüche 5 bis 7 umfasst.

## Revendications

1. Procédé permettant de traiter un support d'enregistrement optique (21) comprenant :
l'irradiation d'une couche d'enregistrement (4) contenant des informations enregistrées, au moyen d'une lumière de traitement, au travers d'un organe de diffusion de lumière, le support d'enregistrement optique (21) comportant au moins la couche d'enregistrement (4) qui enregistre des informations par holographie,
**caractérisé en ce que**
l'organe de diffusion de lumière a une capacité de diffusion comprise entre 70 % et 100 %.

2. Procédé permettant de traiter un support d'enregistrement optique selon la revendication 1, dans lequel la demi-largeur de longueur d'onde de l'intensité d'énergie de la lumière de traitement est comprise entre 5 nm et 700 nm.

3. Procédé permettant de traiter un support d'enregistrement optique (21) selon l'une des revendications 1 à 2, dans lequel le support d'enregistrement optique (21) est un support d'enregistrement optique non réinscriptible (write-once read-many).

4. Procédé d'enregistrement et de reproduction optiques comportant le procédé permettant de traiter un support d'enregistrement optique (21) selon l'une quelconque des revendications 1 à 3.

5. Dispositif permettant de traiter un support d'enregistrement optique (21), comportant :
une source lumineuse pour une lumière de traitement, et
un organe de diffusion de lumière, disposé entre la source lumineuse et le support d'enregistrement optique (21), comportant au moins une couche d'enregistrement (4) qui enregistre les informations par holographie,
la couche d'enregistrement (4) qui contient des informations enregistrées, étant irradié, au travers de l'organe de diffusion de lumière, par la lumière de traitement issue de la source lumineuse,
**caractérisé en ce que**
l'organe de diffusion de lumière a une capacité de diffusion comprise entre 70 % et 100 %.

6. Dispositif permettant de traiter un support d'enregistrement optique (21) selon la revendication 5, dans lequel la demi-largeur de longueur d'onde de l'intensité d'énergie de la lumière de traitement est comprise entre 5 nm et 700 nm.

7. Dispositif permettant de traiter un support d'enregistrement optique (21) selon l'une des revendications 5 à 6, dans lequel le support d'enregistrement optique (21) est un support d'enregistrement optique non réinscriptible (write-once read-many).

8. Dispositif d'enregistrement et de reproduction optiques (100) comportant le dispositif permettant de traiter un support d'enregistrement optique (21) selon l'une quelconque des revendications 5 à 7.
